# EUROPEAN PATENT APPLICATION

(11) **EP 2 770 362 A1**
(43) Date of publication of application: **27.08.2014**
(21) Application number: 14155918.7
(22) Date of filing: 20.02.2014
(51) Int. Cl.: G02B 26/00, G01J 3/26

(54) **Variable-wavelength interference filter, optical filter device, optical module, and electronic apparatus**

(30) Priority: 25.02.2013 JP 2013034258
(71) Applicant: Seiko Epson Corporation, Shinjuku-ku, Tokyo 163-0811 (JP)
(72) Inventor: Nishimura, Teruyuki, Nagano, 392-8502 (JP)
(74) Representative: HOFFMANN EITLE

(57) **Abstract**

A variable-wavelength interference filter includes a pair of substrates, a pair of reflection films provided on these substrates, a first electrode, a second electrode, a first conduction electrode provided on the first substrate and provided from the first electrode up to an outer peripheral edge side of the first substrate over the first electrode, a second conduction electrode provided on the second substrate and electrically connected to the first conduction electrode, and a bonding layer that bonds bonding surfaces of the substrates together. The first substrate has a first conduction electrode surface facing a contact surface where the first conduction electrode and the second conduction electrode contact each other. The second substrate has a second conduction electrode surface facing the contact surface. A minimum distance from the first conduction electrode surface to the second conduction electrode surface is different from a minimum distance from the first bonding surface to the second bonding surface.

## Description

### BACKGROUND

### 1. Technical Field

The present invention relates to a variable-wavelength interference filter, an optical filter device, an optical module, and an electronic apparatus.

### 2. Related Art

Traditionally, a variable-wavelength interference filter is known in which respective reflection films are arranged to face each other via a predetermined gap on surfaces facing each other of a pair of substrates and in which respective drive electrodes are provided on the surfaces facing each other of the respective substrates. In such a variable-wavelength interference filter, the gap between the reflection films is adjusted by an electrostatic attraction due to application of a voltage between the drive electrodes.

In such a variable-wavelength interference filter, a first conduction electrode extending from each drive electrode needs to be formed on each substrate, and these first conduction electrodes need to be wired for voltage application.

For example, in the variable-wavelength interference filter disclosed in JP-A-2012-168438, a first substrate and a second substrate facing each other are bonded together with a bonding film. The bonding film is provided on a first bonding surface of the first substrate and on a second bonding surface of the second substrate. In the first substrate, a first electrode surface is also provided on the same plane as the first bonding surface, and a first conduction electrode to apply a voltage to a second drive electrode is provided on the first electrode surface. In the variable-wavelength interference filter disclosed in JP-A-2012-168438, the first conduction electrode and a second conduction electrode extending from the drive electrode on the second substrate are in surface contact with each other, thus making the first conduction electrode and the second conduction electrode electrically connected to each other.

However, in the variable-wavelength interference filter disclosed in JP-A-2012-168438, since the first bonding surface and the first electrode surface are provided on the same plane, an inter-substrate distance at an inter-substrate conduction portion where the first conduction electrode and the second conduction electrode contact each other is restricted to the space between the first bonding surface and the second bonding surface. Therefore, the thickness of the first conduction electrode and the second conduction electrode at the inter-substrate conduction portion is restricted to the thickness of the bonding film, having a low degree of freedom. This raises a problem that it is difficult to increase or decrease the thickness of the electrodes to be thicker or thinner than the thickness of the bonding layer in accordance with the specification and performance required of the variable-wavelength interference filter.

### SUMMARY

An advantage of some aspects of the invention is that a variable-wavelength interference filter is provided in which the degree of freedom can be improved with respect to the thickness of electrodes at an inter-substrate conduction portion where the electrodes contact each other between substrates, and that an optical filter device, an optical module and an electronic apparatus that have this variable-wavelength interference filter are provided.

An aspect of the invention is directed to a variable-wavelength interference filter including: a first substrate; a second substrate facing the first substrate; a first reflection film that is provided on the first substrate, reflects a part of incident light and transmits a part of the incident light; a second reflection film that is provided on the second substrate, faces the first reflection film, reflects a part of incident light and transmits a part of the incident light; a first electrode provided on the first substrate; a first conduction electrode provided on the first substrate and provided from the first electrode up to an outer peripheral edge side of the first substrate over the first electrode; a second electrode provided on the second substrate and facing the first electrode; a second conduction electrode provided on the second substrate and electrically connected to the first electrode via the first conduction electrode; and a bonding layer bonding together a first bonding surface of the first substrate and a second bonding surface of the second substrate facing the first bonding surface. The first substrate has a first conduction electrode surface facing a contact surface where the first conduction electrode and the second conduction electrode contact each other. The second substrate has a second conduction electrode surface facing the contact surface. A minimum distance from the first conduction electrode surface to the second conduction electrode surface is different from a minimum distance from the first bonding surface to the second bonding surface.

According to this configuration, the variable-wavelength interference filter has the contact surface where the first conduction electrode and the second conduction electrode contact each other. The first substrate is provided with the first conduction electrode surface where the first conduction electrode faces the contact surface. The second substrate is provided with the second conduction electrode surface where the second conduction electrode faces the contact surface. Also, according to this configuration, the minimum distance from the first bonding surface of the first substrate to the second bonding surface of the second substrate is set to be different from the minimum distance from the first conduction electrode surface of the first substrate to the second conduction electrode surface of the second substrate. That is, according to this configuration, the first bonding surface and the first conduction electrode surface are provided on different planes from each other in the direction of thickness of the first substrate, instead of on the same plane. Therefore, at the inter-substrate conduction portion where the first conduction electrode and the second conduction electrode are electrically connected to each other, the thickness of the first conduction electrode and the second conduction electrode can be set without being restricted to the thickness of the bonding layer. Thus, according to this configuration, the degree of freedom can be improved with respect to the thickness of the electrodes at the inter-substrate conduction portion where the electrodes contact each other between the substrates. Therefore, the thickness of the electrodes can be increased or decreased to be thicker or thinner than the thickness of the bonding layer in accordance with the specification and performance required of the variable-wavelength interference filter.

In the variable-wavelength interference filter according to the aspect of the invention, it is preferable that the minimum distance from the first conduction electrode surface to the second conduction electrode surface is longer than the minimum distance from the first bonding surface to the second bonding surface.

According to this configuration, the minimum distance from the first conduction electrode surface to the second conduction electrode surface is longer than the minimum distance from the first bonding surface to the second bonding surface. Therefore, at the inter-substrate conduction portion, the thickness of the first conduction electrode and the second conduction electrode can be set to be thick without being restricted to the thickness of the bonding layer. Thus, the resistance of the electrodes can be reduced.

Meanwhile, it is also preferable that the minimum distance from the first conduction electrode surface to the second conduction electrode surface is shorter than the minimum distance from the first bonding surface to the second bonding surface.

According to this configuration, the minimum distance from the first conduction electrode surface to the second conduction electrode surface is shorter than the minimum distance from the first bonding surface to the second bonding surface. Therefore, at the inter-substrate conduction portion, the thickness of the first conduction electrode and the second conduction electrode can be set to be thin without being restricted to the thickness of the bonding layer. Thus, the resistance of the electrodes can be reduced. Thus, according to this configuration, a film stress of the electrodes can be reduced and a flexure or curvature of the substrates due to the film stress can be restrained.

In the variable-wavelength interference filter according to the aspect of the invention, it is preferable that the site where the second conduction electrode surface is provided on the second substrate is flexible in the direction of thickness of the second substrate.

According to this configuration, when the first conduction electrode and the second conduction electrode contact each other, the contact pressure thereof may exert a stress on the second substrate. Particularly, when the first conduction electrode on the first conduction electrode surface and the second conduction electrode on the second conduction electrode surface are pressed against each other in order to improve conduction reliability between these electrodes, a large stress may be applied to the second substrate. According to this configuration, the site where the second conduction electrode surface is provided on the second substrate is flexible. Therefore, as this flexible site flexes, the stress due to the contact pressure generated by the contact between the first conduction electrode and the second conduction electrode can be released. As a result, the flexure of the second substrate due to the stress caused by the contact pressure can prevented and a fall in resolution of the variable-wavelength interference filter can be restrained.

In the variable-wavelength interference filter according to the aspect of the invention, it is preferable that the site where the first conduction electrode surface is provided on the first substrate is flexible in the direction of thickness of the first substrate.

According to this configuration, when the first conduction electrode and the second conduction electrode contact each other, the contact pressure thereof may exert a stress on the first substrate. Particularly, when the first conduction electrode on the first conduction electrode surface and the second conduction electrode on the second conduction electrode surface are pressed against each other in order to improve conduction reliability between these electrodes, a large stress may be applied to the first substrate. According to this configuration, the site where the first conduction electrode surface is provided on the first substrate is flexible. Therefore, as this flexible site flexes, the stress due to the contact pressure generated by the contact between the first conduction electrode and the second conduction electrode can be released. As a result, the flexure of the first substrate due to the stress caused by the contact pressure can be prevented and a fall in resolution of the variable-wavelength interference filter can be restrained.

Another aspect of the invention is directed to a variable-wavelength interference filter in which light of a wavelength corresponding to a distance between reflection films facing each other is emitted outside and in which the distance is changed based on a potential difference between a first electrode and a second electrode facing the first electrode, including: a first substrate on which the first electrode and a first conduction electrode connected to the first electrode are provided; a second substrate on which the second electrode and a second conduction electrode electrically connected to the first electrode via the first conduction electrode are provided; and a bonding layer bonding the first substrate and the second substrate together. A thickness of a multilayer portion where the first conduction electrode and the second conduction electrode overlap and contact each other is different from a thickness of the bonding layer.

According to this configuration, the thickness of the multilayer portion where the first conduction electrode on the first substrate and the second conduction electrode on the second substrate overlap and contact each other is different from the thickness of the bonding layer. According to this configuration, at the multilayer portion, conduction between the first conduction electrode on the first substrate and the second conduction electrode on the second substrate is achieved and the thickness of the multilayer portion can be set without being restricted to the thickness of the bonding layer. This configuration, too, can enable improvement in the degree of freedom with respect to the film thickness of the electrodes at the inter-substrate conduction portion where the electrodes contact each other between the substrates. Therefore, the film thickness of the electrodes can be increased or decreased to be thicker or thinner than the film thickness of the bonding layer in accordance with the specification and performance required of the variable-wavelength interference filter.

Still another aspect of the invention is directed to an optical filter device including: a variable-wavelength interference filter including a first substrate, a second substrate facing the first substrate, a first reflection film that is provided on the first substrate, reflects a part of incident light and transmits a part of the incident light, a second reflection film that is provided on the second substrate, faces the first reflection film, reflects a part of incident light and transmits a part of the incident light, a first electrode provided on the first substrate, a first conduction electrode provided on the first substrate and provided from the first electrode up to an outer peripheral edge side of the first substrate over the first electrode, a second electrode provided on the second substrate and facing the first electrode, a second conduction electrode provided on the second substrate and electrically connected to the first electrode via the first conduction electrode, and a bonding layer bonding together a first bonding surface of the first substrate and a second bonding surface of the second substrate facing the first bonding surface; and a casing housing the variable-wavelength interference filter. The first substrate has a first conduction electrode surface facing a contact surface where the first conduction electrode and the second conduction electrode contact each other. The second substrate has a second conduction electrode surface facing the contact surface. A minimum distance from the first conduction electrode surface to the second conduction electrode surface is different from a minimum distance from the first bonding surface to the second bonding surface.

According to this configuration, as with the foregoing configurations, the degree of freedom can be improved with respect to the film thickness of the electrodes at the inter-substrate conduction portion where the electrodes contact each other between the substrates of the variable-wavelength interference filter. Moreover, since the variable-wavelength interference filter is housed in the casing, the variable-wavelength interference filter can be protected, for example, from an impact or the like when carried. Also, attachment of foreign matters to the first reflection film and the second reflection film of the variable-wavelength interference filter can be restrained. Such foreign matters may include water drops, charged substances and the like.

Yet another aspect of the invention is directed to an optical module including: a variable-wavelength interference filter including a first substrate, a second substrate facing the first substrate, a first reflection film that is provided on the first substrate, reflects a part of incident light and transmits a part of the incident light, a second reflection film that is provided on the second substrate, faces the first reflection film, reflects a part of incident light and transmits a part of the incident light, a first electrode provided on the first substrate, a first conduction electrode provided on the first substrate and provided from the first electrode up to an outer peripheral edge side of the first substrate over the first electrode, a second electrode provided on the second substrate and facing the first electrode, a second conduction electrode provided on the second substrate and electrically connected to the first electrode via the first conduction electrode, and a bonding layer bonding together a first bonding surface of the first substrate and a second bonding surface of the second substrate facing the first bonding surface; and a detection unit that detects light of a wavelength selected by interference of light incident between the first reflection film and the second reflection. The first substrate has a first conduction electrode surface facing a contact surface where the first conduction electrode and the second conduction electrode contact each other. The second substrate has a second conduction electrode surface facing the contact surface. A minimum distance from the first conduction electrode surface to the second conduction electrode surface is different from a minimum distance from the first bonding surface to the second bonding surface.

According to this configuration, as with the foregoing configurations, the degree of freedom can be improved with respect to the film thickness of the electrodes at the inter-substrate conduction portion where the electrodes contact each other between the substrates of the variable-wavelength interference filter. Therefore, by setting the film thickness of the electrodes at the inter-substrate conduction portion of the variable-wavelength interference filter to be thicker or thinner than the film thickness of the bonding layer, the amount of light can be detected highly accurately by the optical module.

Still yet another aspect of the invention is directed to an electronic apparatus including: a variable-wavelength interference filter including a first substrate, a second substrate facing the first substrate, a first reflection film that is provided on the first substrate, reflects a part of incident light and transmits a part of the incident light, a second reflection film that is provided on the second substrate, faces the first reflection film, reflects a part of incident light and transmits a part of the incident light, a first electrode provided on the first substrate, a first conduction electrode provided on the first substrate and provided from the first electrode up to an outer peripheral edge side of the first substrate over the first electrode, a second electrode provided on the second substrate and facing the first electrode, a second conduction electrode provided on the second substrate and electrically connected to the first electrode via the first conduction electrode, and a bonding layer bonding together a first bonding surface of the first substrate and a second bonding surface of the second substrate facing the first bonding surface; and a control unit that controls the variable-wavelength interference filter. The first substrate has a first conduction electrode surface facing a contact surface where the first conduction electrode and the second conduction electrode contact each other. The second substrate has a second conduction electrode surface facing the contact surface. A minimum distance from the first conduction electrode surface to the second conduction electrode surface is different from a minimum distance from the first bonding surface to the second bonding surface.

According to this configuration, as with the foregoing configurations, the degree of freedom can be improved with respect to the film thickness of the electrodes at the inter-substrate conduction portion where the electrodes contact each other between the substrates of the variable-wavelength interference filter. Therefore, by setting the film thickness of the electrodes at the inter-substrate conduction portion of the variable-wavelength interference filter to be thicker or thinner than the film thickness of the bonding layer, light of a wavelength selected by multiple interference between the first reflection film and the second reflection film can be taken out highly accurately. Thus, highly accurate processing can be realized in various kinds of processing using the light taken out in the electronic apparatus.

### BRIEF DESCRIPTION OF THE DRAWINGS

The invention will be described with reference to the accompanying drawings, wherein like numbers reference like elements.
FIG. 1 is a block diagram showing the schematic configuration of a spectroscopic measurement device according to a first embodiment of the invention.
FIG. 2 is a plan view showing the schematic configuration of a variable-wavelength interference filter according to the embodiment.
FIG. 3 is a cross-sectional view showing the schematic configuration of the variable-wavelength interference filter according to the embodiment.
FIG. 4 is a plan view showing a first substrate of the variable-wavelength interference filter according to the embodiment, as viewed from the side of a second substrate.
FIG. 5 is a plan view showing the second substrate of the variable-wavelength interference filter according to the embodiment, as viewed from the side of the first substrate.
FIG. 6 is a cross-sectional view of a variable-wavelength interference filter according to a second embodiment of the invention.
FIG. 7 is a cross-sectional view of a variable-wavelength interference filter according to a third embodiment of the invention.
FIG. 8 is a cross-sectional view of a variable-wavelength interference filter according to a fourth embodiment of the invention.
FIG. 9 is a partial cross-sectional view of a variable-wavelength interference filter according to a fifth embodiment of the invention.
FIG. 10 is a cross-sectional view showing the schematic configuration of an optical filter device according to a sixth embodiment of the invention.
FIG. 11 is a block diagram showing an example of a color measurement device as an electronic apparatus according to the invention.
FIG. 12 is a schematic view showing an example of a gas detection device as an electronic apparatus according to the invention.
FIG. 13 is a block diagram showing the configuration of a control system of the gas detection device of FIG. 12.
FIG. 14 shows the schematic configuration of a food analyzer as an electronic apparatus according to the invention.
FIG. 15 is a schematic diagram showing the schematic configuration of a spectroscopic camera as an electronic apparatus according to the invention.

### DESCRIPTION OF EXEMPLARY EMBODIMENTS

### First Embodiment

Hereinafter, a first embodiment of the invention will be described with reference to the drawings.

### Configuration of Spectroscopic Measurement Device

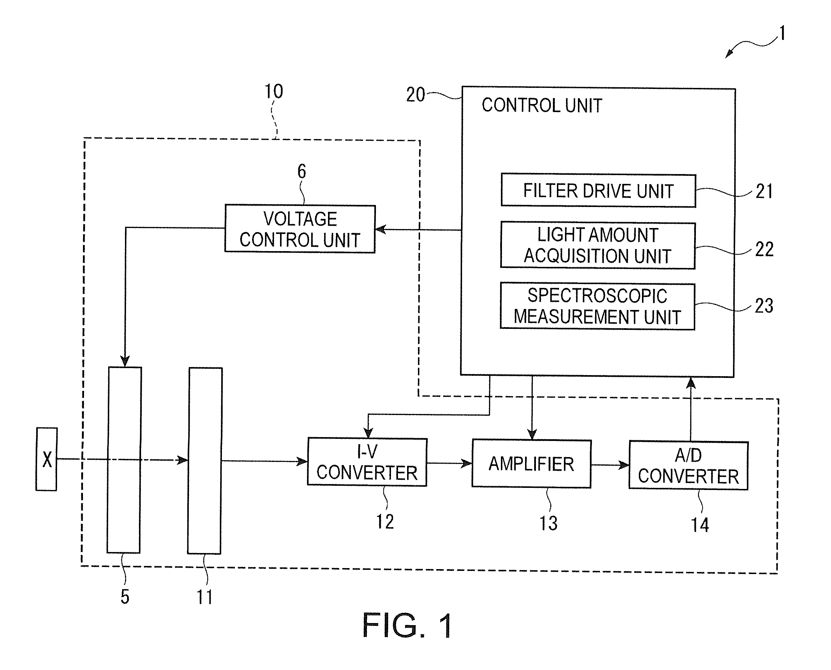

FIG. 1 is a block diagram showing the schematic configuration of a spectroscopic measurement device according to an embodiment of the invention.

A spectroscopic measurement device 1 is an electronic apparatus according to the invention which measures the spectrum of measurement target light, based on the measurement target light reflected by an object to be measured X. This embodiment presents an example where measurement target light reflected by the object to be measured X is measured. However, for example, if a light emitting body such as a liquid crystal panel is used as the object to be measured X, light emitted from the light emitting body may be used as measurement target light.

This spectroscopic measurement device 1 has an optical module 10 and a control unit 20, as shown in FIG. 1.

### Configuration of Optical Module

Next, the configuration of the optical module 10 will be described.

The optical module 10 has a variable-wavelength interference filter 5, a detector 11, an I-V converter 12, an amplifier 13, an A/D converter 14, and a voltage control unit 6, as shown in FIG. 1.

The detector 11 receives light transmitted through the variable-wavelength interference filter 5 of the optical module 10 and outputs a detection signal (current) corresponding to the light intensity of the received light.

The I-V converter 12 converts the detection signal inputted from the detector 11 into a voltage value and outputs the voltage value to the amplifier 13.

The amplifier 13 amplifies the voltage (detection voltage) corresponding to the detection signal inputted from the I-V converter 12.

The A/D converter 14 converts the detection voltage (analog signal) inputted from the amplifier 13 into a digital signal and outputs the digital signal to the control unit 20.

The configuration of the voltage control unit 6 will be described in detail later.

### Configuration of Variable-Wavelength Interference Filter

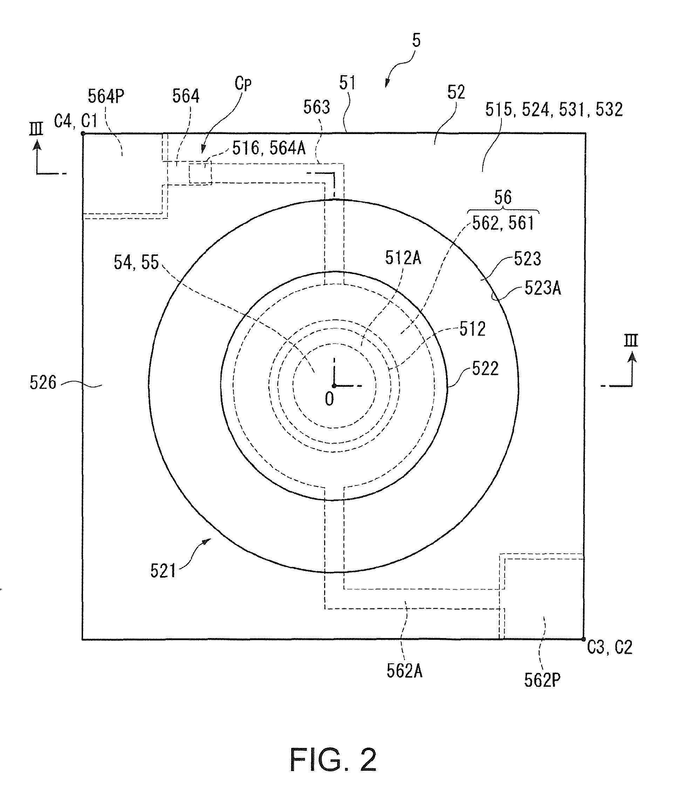

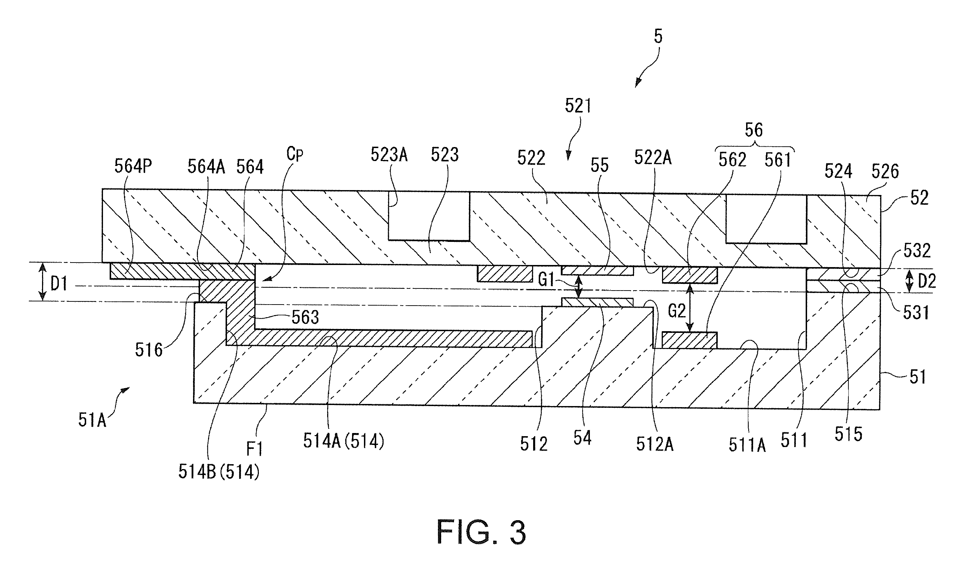

FIG. 2 is a plan view showing the schematic configuration of the variable-wavelength interference filter 5. FIG. 3 is a cross-sectional view showing the schematic configuration of the variable-wavelength interference filter 5, taken along III-III in FIG. 2.

This variable-wavelength interference filter 5 is a so-called Fabry-Perot etalon filter. The variable-wavelength interference filter 5 has a fixed substrate 51 and a movable substrate 52, as shown in FIG. 2. This embodiment is described on the assumption that the fixed substrate 51 is equivalent to a first substrate and that the movable substrate 52 is equivalent to a second substrate. It should be noted that a first substrate may be the movable substrate 52 while a second substrate may be the fixed substrate 51, as opposed to this embodiment.

Each of the fixed substrate 51 and the movable substrate 52 is made of, for example, various kinds of glass, quartz crystal, silicon or the like. The types of glass used for the substrates may include, for example, soda-lime glass, crystalline glass, quartz glass, lead glass, potassium glass, borosilicate glass, non-alkaline glass, or the like. The fixed substrate 51 is formed by etching, for example, a 500-µm thick quartz glass base material. The movable substrate 52 is formed by etching, for example, a 200-µm thick glass base material.

The fixed substrate 51 and the movable substrate 52 are bonded together and integrally formed via a bonding layer based on siloxane bonding using a plasma polymerized film. Specifically, a first bonding surface 515 of the fixed substrate 51 and a second bonding surface 524 of the movable substrate 52 are bonded together via a bonding layer. The bonding layer includes a first bonding film 531 and a second bonding film 532. The first bonding film 531 is provided on the first bonding surface 515. The second bonding film 532 is provided on the second bonding surface 524.

A fixed reflection film 54 is provided on the fixed substrate 51. A movable reflection film 55 is provided on the movable substrate 52. In this embodiment, the fixed reflection film 54 is equivalent to a first reflection film and the movable reflection film 55 is equivalent to a second reflection film. The fixed reflection film 54 reflects a part of incident light and transmits a part of the incident light. The movable reflection film 55, too, reflects a part of incident light and transmits a part of the incident light.

The fixed reflection film 54 and the movable reflection film 55 are arranged to face each other via an inter-reflection film gap G1. The variable-wavelength interference filter 5 is provided with an electrostatic actuator 56 used to adjust the size (gap dimension) of the inter-reflection film gap G1.

The electrostatic actuator 56 includes a fixed electrode 561 provided on the fixed substrate 51 and a movable electrode 562 provided on the movable substrate 52. In this embodiment, the fixed electrode 561 is equivalent to a first electrode and the movable electrode 562 is equivalent to a second electrode. The fixed electrode 561 and the movable electrode 562 form drive electrodes facing each other.

The fixed electrode 561 and the movable electrode 562 may be directly provided on the respective substrate surfaces of the fixed substrate 51 and the movable substrate 52 or may be provided via another film member.

### Configuration of Fixed Substrate

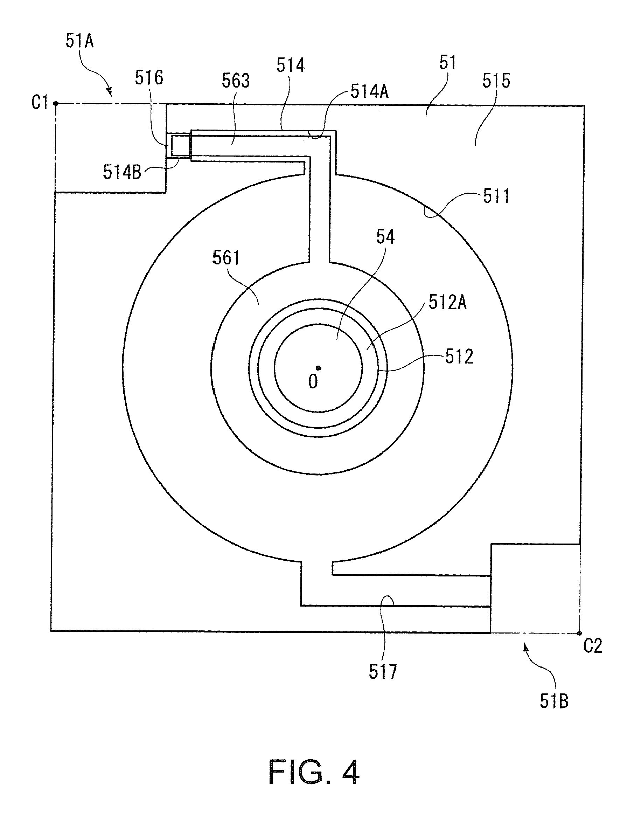

FIG. 4 is a plan view of the fixed substrate 51, as viewed from the side of the movable substrate 52.

The fixed substrate 51 is formed to a larger thickness dimension than the movable substrate 52 and therefore there is no flexure of the fixed substrate 51 due to an electrostatic attraction by the electrostatic actuator 56 or due to an internal stress of the film member provided on the fixed substrate 51. The film member provided on the fixed substrate 51 may be, for example, the fixed reflection film 54 or the like.

The fixed substrate 51 has an electrode arrangement groove 511, a reflection film installation portion 512 and a protruding portion 514B that are formed, for example, by etching, as shown in FIGS. 3 and 4.

The reflection film installation portion 512 has a reflection film installation surface 512A facing the movable substrate 52. The reflection film installation surface 512A is a circular flat surface with a predetermined radius about a filter center point O of the fixed substrate 51, as viewed in a filter plan view, and is parallel to a surface of the movable substrate 52 that faces the fixed substrate 51 (movable surface 522A). In this embodiment, the circular reflection film installation surface 512A is illustrated but this shape is not limiting. For example, a polygonal shape such as octagonal or hexagonal, or an elliptical shape may also be used.

The electrode arrangement groove 511 is provided outside the reflection film installation portion 512 and provided annularly about the filter center point O, as viewed in a filter plan view. The surface facing the movable substrate 52 in the electrode arrangement groove 511 has a longer distance from the movable substrate 52 than the reflection film installation surface 512A. The electrode arrangement groove 511 has an electrode installation surface 511A parallel to the movable substrate 52 and the reflection film installation surface 512A.

On an outer peripheral edge of the fixed substrate 51, a cutout portion 51A and a cutout portion 51B are provided. In this embodiment, the cutout portion 51A and the cutout portion 51B are provided in two diagonal corners of the four corners of the quadrilateral, as viewed in the plan view of the fixed substrate 51 shown in FIG. 4. In FIG. 4, virtual vertices C1 and C2 of the fixed substrate 51 are shown, and the cutout portion 51A and the cutout portion 51B are formed by cutting out quadrilaterals on the sides of the vertices C1 and C2 of the fixed substrate 51.

The fixed substrate 51 has a first groove 514 provided from an outer peripheral edge side of the electrode arrangement groove 511 toward the cutout portion 51A, and a second groove 517 provided from an outer peripheral edge of the electrode arrangement groove 511 toward the cutout portion 51B.

The first groove 514 includes a first groove portion 514A provided from the outer peripheral edge of the electrode arrangement groove 511 toward the cutout portion 51A, and a protruding portion 514B continuing from a distal end portion of the first groove portion 514A on the side of the cutout portion 51A.

The first groove portion 514A is a groove provided by etching to the same depth dimension as the electrode arrangement groove 511. In this embodiment, the first groove portion 514A is provided, for example, in an L-shape, as viewed in a filter plan view.

The protruding portion 514B is provided by etching to a shallower depth dimension than the electrode arrangement groove 511. The protruding portion 514B is a portion protruding toward the movable substrate 52 from the first groove portion 514A. A surface of the protruding portion 514B that faces the movable substrate 52 is located on a different plane from the first bonding surface 515 and formed a first conduction electrode surface 516.

In this embodiment, if the surface of the fixed substrate 51 that does not face the movable substrate 52 is a reference surface F1 as shown in FIG. 3, the first conduction electrode surface 516 is located more to the side of the first reference surface F1 than the first bonding surface 515.

Also, in this embodiment, the first conduction electrode surface 516 and the reflection film installation surface 512A are located in the same plane.

The second groove 517, too, is a groove provided by etching to the same depth dimension as the electrode arrangement groove 511. In this embodiment, the second groove 517 is provided, for example, in an L-shape, as viewed in a filter plan view.

The fixed electrode 561 constituting the electrostatic actuator 56 is provided on the electrode installation surface 511A. The fixed electrode 561 is preferably provided in a substantially annular shape about the filter center point O and more preferably in a circular ring-shape. The annular shape mentioned here includes partly cutout configurations, for example, a C-shape or the like.

Also, a first conduction electrode 563 is provided from an outer peripheral edge side of the fixed electrode 561 toward an outer peripheral edge of the fixed substrate 51. In this embodiment, the first conduction electrode 563 is provided from the outer peripheral edge side of the fixed electrode 561 to the protruding portion 514B, along the first groove portion 514A heading toward the cutout portion 51A. A distal end portion of the first conduction electrode 563 on the side of the cutout portion 51A is provided on the first conduction electrode surface 516 of the protruding portion 514B. The first conduction electrode 563 provided on the first conduction electrode surface 516 contacts and becomes electrically connected to a second conduction electrode provided on a second conduction electrode surface of the movable substrate 52, as later described. A surface where the first conduction electrode 563 and the second conduction electrode contact each other is a contact surface. The first conduction electrode surface 516 and the second conduction electrode surface respectively face the contact surface.

The fixed electrode 561 and the first conduction electrode 563 may be made of any electrically conductive material. Specifically, the fixed electrode 561 and the first conduction electrode 563 are made of a metal oxide with good contactability to metal films and alloy films, for example, made of an ITO (indium tin oxide) film or a multilayer body including a Cr layer and an Au layer, or the like.

Also, an insulating film to secure insulation between the fixed electrode 561 and the movable electrode 562 may be stacked on the fixed electrode 561.

In this embodiment, a configuration in which one fixed electrode 561 is provided on the electrode installation surface 511A is described. However, for example, a configuration in which two electrodes that are concentric about the filter center point O are provided (double-electrode configuration) may also be employed.

The fixed reflection film 54 is provided on the reflection film installation surface 512A of the reflection film installation portion 512.

The fixed reflection film 54 may be installed directly on the reflection film installation portion 512. Alternatively, another thin film (layer) may be provided on the reflection film installation portion 512, and the fixed reflection film 54 may be installed thereon. As the fixed reflection film 54, for example, a metal film of Ag or the like, or an electrically conductive alloy film of an Ag alloy or the like can be used. If a metal film of Ag or the like is used, it is preferable to form a protection film to restrain deterioration of Ag.

Also, a dielectric multilayer film in which, for example, a high refractive layer of TiO₂ and a low refractive layer of SiO₂ are alternately stacked may be used. Moreover, a reflection film in which a dielectric multilayer film and a metal film are stacked, a reflection film in which a dielectric single-layer film and an alloy film are stacked, or the like may be used.

On a light incident surface (a surface where the fixed reflection film 54 is not provided) of the fixed substrate 51, an antireflection film may be formed at a position corresponding to the fixed reflection film 54. The antireflection film can be formed by alternately stacking a low refractive film and a high refractive film. The antireflection film can lower the reflectance of visible light on the surface of the fixed substrate 51 and increase the transmittance thereof.

Of the surface of the fixed substrate 51 that faces the movable substrate 52, a surface where the electrode arrangement groove 511, the reflection film installation portion 512, the first groove portion 514A, the protruding portion 514B and the second groove 517 are not provided forms the first bonding surface 515. The first bonding surface 515 is bonded to the second bonding surface 524 of the movable substrate 52 via the bonding layer including the first bonding film 531 and the second bonding film 532.

### Configuration of Movable Substrate

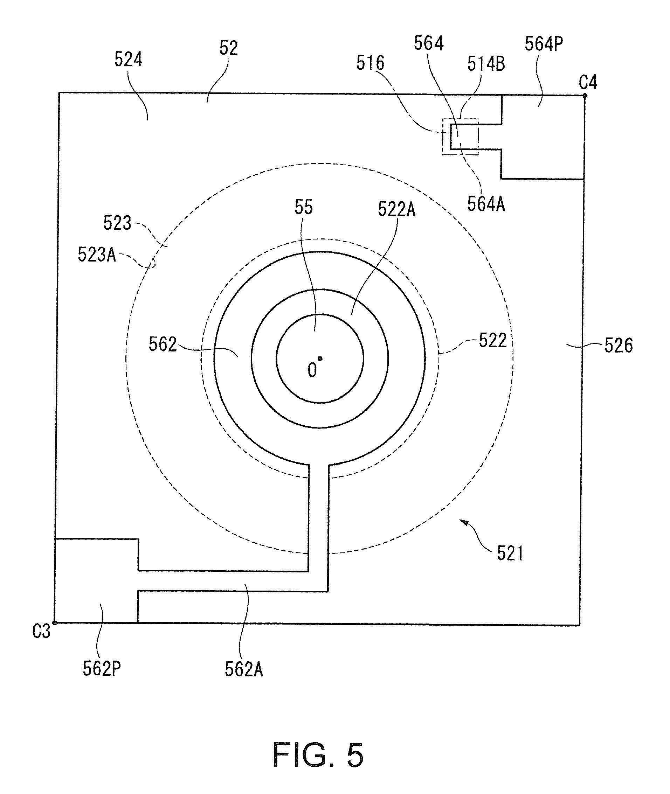

FIG. 5 is a plan view of the movable substrate 52, as viewed from the side of the fixed substrate 51.

The movable substrate 52 is provided with a circular displacement portion 521 about the filter center point O, as viewed in a filter plan view. The displacement portion 521 includes a circular-columnar movable portion 522 which can move toward and away from the fixed substrate 51, a connection holding portion 523 which movably holds the movable portion 522 in a direction of thickness of the movable portion 522, and a substrate outer peripheral portion 526 provided outside the connection holding portion 523, as shown in FIGS. 2, 3 and 5. The connection holding portion 523 is provided in a circular ring-shape that is coaxial with the circular-columnar movable portion 522.

On a surface of the movable substrate 52 that faces the fixed substrate 51, a region facing the first bonding surface 515 of the fixed substrate 51 is the second bonding surface 524 of the movable substrate 52. The second bonding surface 524 is bonded to the first bonding surface 515 via the bonding layer including the first bonding film 531 and the second bonding film 532.

Similarly to the fixed substrate 51, an antireflection film may be provided on the surface of the movable portion 522 that is opposite to the fixed substrate 51.

The displacement portion 521 is formed, for example, by etching a flat plate-like glass base material that is the material forming the movable substrate 52 and thus forming a groove. That is, the displacement portion 521 is formed by etching the surface of the movable substrate 52 that does not face the fixed substrate 51 and thus forming a circular ring groove portion 523A to form the connection holding portion 523.

The movable portion 522 is provided with a greater thickness dimension than the connection holding portion 523. For example, in this embodiment, the movable portion 522 is provided with the same thickness dimension as the substrate outer peripheral portion 526 of the movable substrate 52.

The movable portion 522 is provided with a diameter dimension that is at least greater than the diameter dimension of the outer peripheral edge of the reflection film installation surface 512A, as viewed in a filter plan view.

A surface of the movable portion 522 that faces the fixed substrate 51 is a movable surface 522A. The movable surface 522A is maintained parallel to the reflection film installation surface 512A of the fixed substrate 51. The movable surface 522A is provided with the movable electrode 562 constituting the electrostatic actuator 56, and with the movable reflection film 55. The movable electrode 562 may be provided directly on the movable surface 522A. Alternatively, another thin film (layer) may be provided on the movable surface 522A and the movable electrode 562 may be installed thereon.

The movable electrode 562 is a ring-shaped electrode provided on the movable surface 522A, as shown in FIGS. 2, 3 and 5. The movable electrode 562 together with the fixed electrode 561 forms the electrostatic actuator 56. The movable electrode 562 may be electrically conductive, similarly to the fixed electrode 561. For example, an ITO film, a multilayer body in which a Cr layer and an Au layer are stacked, or the like can be used.

In FIG. 5, vertices C3 and C4 of the movable substrate 52 are shown. In this embodiment, when the fixed substrate 51 and the movable substrate 52 are bonded together, the vertex C1 of the fixed substrate 51 and the vertex C4 of the movable substrate 52 are arranged to face each other, and the vertex C2 of the fixed substrate 51 and the vertex C3 of the movable substrate 52 are arranged to face each other.

In this embodiment, a third conduction electrode 562A is provided which is bent in an L-shape from an outer peripheral edge side of the movable electrode 562 to the side of the vertex C3. A distal end portion of the third conduction electrode 562A on the side of the vertex C3 forms an electrode pad 562P connected to the voltage control unit 6. This electrode pad 562P is exposed at the cutout portion 51B of the fixed substrate 51, as viewed in a plan view of the variable-wavelength interference filter 5 seen from the side of the fixed substrate 51. When the fixed substrate 51 and the movable substrate 52 are bonded together, the third conduction electrode 562A is arranged in the second groove 517 of the fixed substrate 51.

The movable reflection film 55 is provided at a central part of a movable surface 522A of the movable portion 522, facing the fixed reflection film 54 via the inter-reflection film gap G1. As the movable reflection film 55, a reflection film having the same configuration as the fixed reflection film 54 is used.

In this embodiment, an example where an inter-electrode gap G2 between the fixed electrode 561 and the movable electrode 562 is larger than the inter-reflection film gap G1 between the reflection films 54, 55 is illustrated. However, this example is not limiting. For example, when infrared rays or far infrared rays are used as measurement target light, the inter-reflection film gap G1 may be larger than the inter-electrode gap G2, depending on the wavelength range of the measurement target light.

The connection holding portion 523 is a diaphragm surrounding the movable portion 522. Such a connection holding portion 523 is more flexible than the movable portion 522 and can displace the movable portion 522 toward the fixed substrate 51 with a very small electrostatic attraction. While the connection holding portion 523 in the form of a diaphragm is illustrated in this embodiment, for example, a connection holding portion having plural pairs of beam structures provided at point-symmetric positions about the center of the movable portion 522 may be provided.

An electrode pad 564P is provided on the side of the vertex C4 of the movable substrate 52, as shown in FIG. 5. The electrode pad 564P is exposed at the cutout portion 51A of the fixed substrate 51, as viewed in a plan view of the variable-wavelength interference filter 5 seen from the side of the fixed substrate 51. The electrode pad 564P is connected to the voltage control unit 6. On the movable substrate 52, a second conduction electrode 564 extending inward from the electrode pad 564P along the surface of the movable substrate 52 is provided.

The second conduction electrode 564 is an electrode insulated from the movable electrode 562 and the third conduction electrode 562A and is electrically connected to the fixed electrode 561 via the first conduction electrode 563 provided on the side of the fixed substrate 51.

A distal end portion of the second conduction electrode 564 on the inner side of the movable substrate 52 is provided up to a region facing the first conduction electrode surface 516 of the protruding portion 514B on the fixed substrate 51. The surface where the distal end portion of the second conduction electrode 564 is provided is a second conduction electrode surface 564A. The second conduction electrode surface 564A faces the aforementioned contact surface and also faces the first conduction electrode surface 516. The second conduction electrode 564 on the second conduction electrode surface 564A contacts and becomes electrically connected to the first conduction electrode 563 on the first conduction electrode surface 516.

The second conduction electrode surface 564A is located on the same plane as the movable surface 522A and the second bonding surface 524. Meanwhile, the first conduction electrode surface 516 of the fixed substrate 51 is located more to side of the first reference surface F1 than the first bonding surface 516. Therefore, as shown in FIG. 2, a minimum distance D1 from the first conduction electrode surface 516 to the second conduction electrode surface 564A is longer than a minimum distance D2 from the first bonding surface 515 to the second bonding surface 524.

When the fixed substrate 51 and the movable substrate 52 are bonded together, the second conduction electrode 564 provided on the second conduction electrode surface 564A comes in surface contact with the first conduction electrode 563 provided on the first conduction electrode surface 516, at an inter-substrate conduction portion Cp, as shown in FIG. 2. Thus, the second conduction electrode 564 and the fixed electrode 561 are in an electrically connected state. As shown in FIG. 2, the site where the first conduction electrode 563 and the second conduction electrode 564 overlap and contact each other is equivalent to a multiplayer portion according to an embodiment of the invention.

It is preferable that the surfaces of the second conduction electrode 564 and the first conduction electrode 563 are made of a material with low electrical resistance. This is because such a configuration enables a reduction in contact resistance in the portion where the surface contact takes place, elimination of an excess resistance component, and achievement of secure electrical conduction. As such a material with low electrical resistance, for example, a metal film of Au or the like, a metal multilayer body of Au/Cr or the like, or a configuration in which a metal material such as Au or a metal multilayer body of Au/Cr or the like is stacked on the surface of a metal oxide such as ITO, can be selected. A configuration in which a metal film or metal multilayer film is locally stacked only around a region where the surface contact takes place, of an electrode made of a metal oxide such as ITO, may also be used.

The electrode pad 562P and the electrode pad 564P can be made of a similar material to the fixed electrode 561 and the movable electrode 562.

The electrode pad 562P and the electrode pad 564P are connected to the voltage control unit 6. When the electrostatic actuator 56 is driven, a voltage is applied to the electrode pad 562P and the electrode pad 564P by the voltage control unit 6, and the voltage is thus applied to the fixed electrode 561 and the movable electrode 562.

### Configuration of Voltage Control Unit

The voltage control unit 6 is connected to the movable substrate 52 of the variable-wavelength interference filter 5. Specifically, the voltage control unit 6 is connected to the second conduction electrode 564 via the electrode pad 564P on the movable substrate 52 and is connected to the third conduction electrode 562A via the electrode pad 562P. The second conduction electrode 564 is electrically connected to the fixed electrode 561 on the fixed substrate 51 via the first conduction electrode 563, as described above.

As the voltage control unit 6 received a voltage command signal corresponding to a measurement target wavelength from the control unit 20, the voltage control unit 6 applies a corresponding voltage between the electrode pad 562P and the electrode pad 564P. Thus, an electrostatic attraction based on the applied voltage is generated between the fixed electrode 561 and the movable electrode 562 forming the electrostatic actuator 56 of the variable-wavelength interference filter 5. This electrostatic attraction causes the movable portion 522 to be displaced toward the fixed substrate 51, changing the size of the inter-reflection film gap G1.

### Configuration of Control Unit

The control unit 20 is formed, for example, by a combination of a CPU, a memory and the like. The control unit 20 controls the overall operation of the spectroscopic measurement device 1. As shown in FIG. 1, the control unit 20 has a filter drive unit 21, a light amount acquisition unit 22, and a spectroscopic measurement unit 23.

The control unit 20 also has a storage unit (not shown) storing various data. V-λ data for controlling the electrostatic actuator 56 is stored in the storage unit.

In this V-λ data, a peak wavelength of light transmitted through the variable-wavelength interference filter 5 in relation to the voltage applied to the electrostatic actuator 56 is stored.

The filter drive unit 21 sets a target wavelength of light to be taken out by the variable-wavelength interference filter 5. The filter drive unit 21 also reads a target voltage value corresponding to the target wavelength that is set based on the V-λ data stored in the storage unit. The filter drive unit 21 then outputs, to the voltage control unit 6, a control signal to the effect that the target voltage value thus read is to be applied. This causes the voltage control unit 6 to apply a voltage with the target voltage value to the electrostatic actuator 56.

The light amount acquisition unit 22 acquires the amount of light of the target wavelength transmitted through the variable-wavelength interference filter 5, based on the amount of light acquired by the detector 11.

The spectroscopic measurement unit 23 measures spectral characteristics of the measurement target light, based on the amount of light acquired by the light amount acquisition unit 22.

A spectroscopic measurement method by the spectroscopic measurement unit 23 may be, for example, a method in which an optical spectrum is measured, using the amount of light detected by the detector 11 with respect to a measurement target wavelength as the amount of light of the measurement target light. Another spectroscopic measurement method may be a method in which an optical spectrum is measured based on the amounts of light of plural measurement target wavelengths, or the like.

As a method for estimating an optical spectrum, for example, a measured spectral matrix in which each of the amounts of light with respect to plural measurement target wavelengths is a matrix element is generated, and a predetermined transformation matrix is performed on the measured spectral matrix, thus estimating an optical spectrum of measurement target light. In this case, plural sample lights with a known optical spectrum are measured by the spectroscopic measurement device 1, and a transformation matrix is set so as to minimize the deviation between a matrix formed by performing a transformation matrix on a measured spectral matrix generated on the basis of the amount of light obtained by the measurement and the known optical spectrum.

### Advantageous Effects of First Embodiment

In the variable-wavelength interference filter 5 according to this embodiment, the first conduction electrode 563 on the first conduction electrode surface 516 of the fixed substrate 51 is in surface contact with and electrically connected to the second conduction electrode 564 on the second conduction electrode surface 564A of the movable substrate 52. Moreover, in the variable-wavelength interference filter 5, the minimum distance D2 from the first bonding surface 515 of the fixed substrate 51 to the second bonding surface 524 of the movable substrate 52 is set to be different from the minimum distance D1 from the first conduction electrode surface 516 of the fixed substrate 51 to the second conduction electrode surface 564A of the movable substrate 52. That is, in the variable-wavelength interference filter 5, the first bonding surface 515 and the first conduction electrode surface 516 are not on the same plane and provided on different planes from each other in the direction of thickness of the fixed substrate 51. Therefore, at the inter-substrate conduction portion Cp where the first conduction electrode 563 and the second conduction electrode 564 are electrically connected together, the film thickness of the first conduction electrode 563 and the second conduction electrode 564 can be set without being limited to the film thickness of the bonding layer formed by the first bonding film 531 and the second bonding film 532. Thus, according to the variable-wavelength interference filter 5, the degree of freedom can be improved in the film thickness of the electrodes at the inter-substrate conduction portion Cp where the electrodes contact each other between the fixed substrate 51 and the movable substrate 52.

Also, in the variable-wavelength interference filter 5, since the minimum distance D1 from the first conduction electrode surface 516 to the second conduction electrode surface 564A is longer than the minimum distance D2 from the first bonding surface 515 to the second bonding surface 524, the film thickness of the first conduction electrode 563 and the second conduction electrode 564 can be set to be thick at the inter-substrate conduction portion Cp, without being limited to the film thickness of the bonding layer. Therefore, in the variable-wavelength interference filter 5, the resistance of the electrodes can be reduced.

Moreover, in the variable-wavelength interference filter 5, the first conduction electrode surface 516 and the reflection film installation surface 512A are located in the same plane. Therefore, when etching the fixed substrate 51, the protruding portion 514B may be formed by etching to the same depth dimension as the reflection film installation portion 512. That is, the variable-wavelength interference filter 5 can be produced without increasing the number of etching processes.

### Second Embodiment

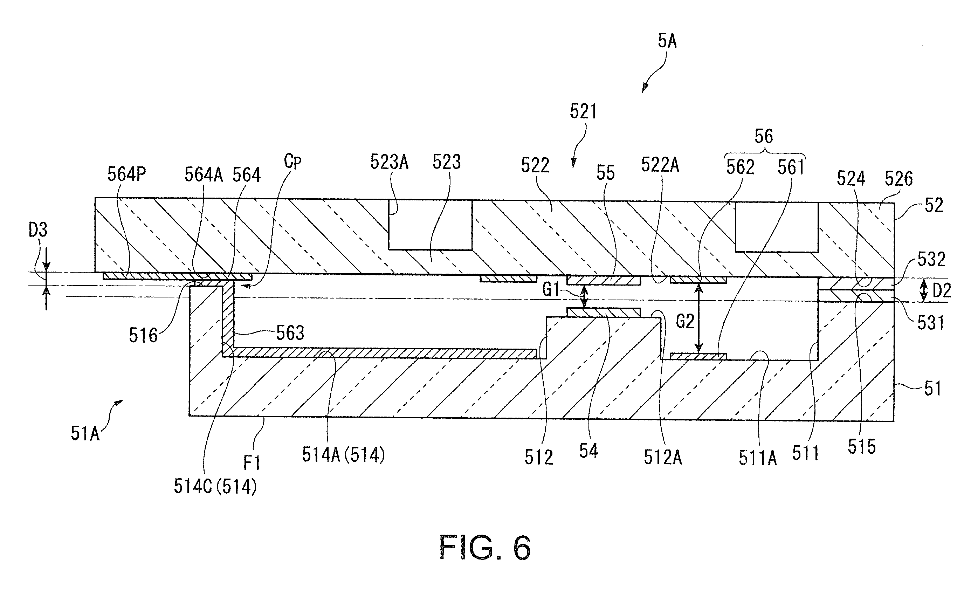

Hereinafter, a second embodiment of the invention will be described with reference to FIG. 6. FIG. 6 is a schematic cross-sectional view showing a variable-wavelength interference filter 5A according to this embodiment. In the following description, the same components as in the foregoing embodiment are denoted by the same reference numerals and description thereof is simplified or omitted.

The variable-wavelength interference filter 5A of this embodiment is different from the variable-wavelength interference filter 5 of the first embodiment in that the variable-wavelength interference filter 5A has a protruding portion 514C having a greater height dimension than the protruding portion 514B on the fixed substrate 51 of the first embodiment.

The protruding portion 514C is a site protruding toward the movable substrate 52. The first conduction electrode surface 516 of the protruding portion 514C that faces the movable substrate 52 is closer to the movable substrate 52 than the first bonding surface 515. In this embodiment, the protruding portion 514C is a region that is not etched, and the first bonding surface 515 is formed by etching. As shown in FIG. 6, if a surface of the fixed substrate 51 that does not face the movable substrate 52 is a first reference surface F1, the first conduction electrode surface 516 is located at a higher position than the first bonding surface 515 with respect to the first reference surface F1. Therefore, in this embodiment, a minimum distance D3 from the first conduction electrode surface 516 to the second conduction electrode surface 564A is shorter than the minimum distance D2 from the first bonding surface 515 to the second bonding surface 524, as shown in FIG. 6.

### Advantageous Effects of Second Embodiment

According to the variable-wavelength interference filter 5A, since the minimum distance D3 from the first conduction electrode surface 516 to the second conduction electrode surface 564A is shorter than the minimum distance D2 from the first bonding surface 515 to the second bonding surface 524, the film thickness of the first conduction electrode 563 and the second conduction electrode 564 can be set to be thin at the inter-substrate conduction portion Cp, without being limited to the film thickness of the bonding layer. Therefore, in the variable-wavelength interference filter 5A, a film stress of the electrodes can be reduced and a flexure or curvature of the substrates due to the film stress can be restrained.

### Third Embodiment

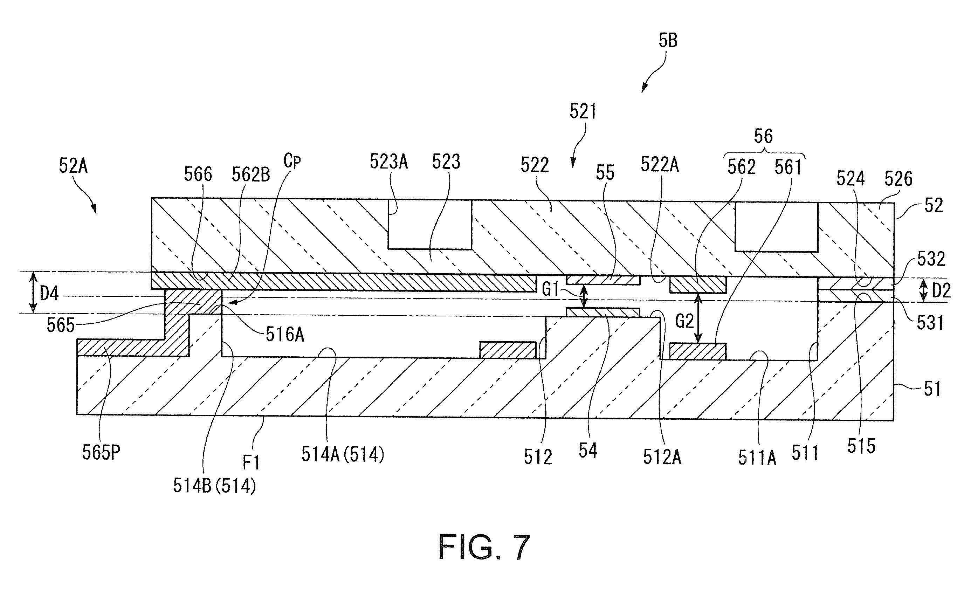

Hereinafter, a third embodiment of the invention will be described with reference to FIG. 7. FIG. 7 is a schematic cross-sectional view showing a variable-wavelength interference filter 5B according to this embodiment. In the following description, the same components as in the foregoing embodiments are denoted by the same reference numerals and description thereof is simplified or omitted.

In the variable-wavelength interference filter 5B, unlike the variable-wavelength interference filter of the first embodiment, the correspondence of the substrates is such that the fixed substrate 51 is equivalent to a second substrate, whereas the movable substrate 52 is equivalent to a first substrate. That is, in the variable-wavelength interference filter 5B, a second conduction electrode 565 for voltage application to the movable electrode 562 is provided on the side of the fixed substrate 51. In this embodiment, the fixed substrate 51 is not provided with the cutout portions 51A and the cutout portion 51B as in the first embodiment and is formed as a quadrilateral substrate. In this embodiment, an electrode pad portion 565P is provided at a portion on the outer side of the protruding portion 514B, that is, at the portion that is defined as the cutout portion 51A in the first embodiment. The second conduction electrode 565 is provided from the electrode pad portion 565P up to an upper surface of the protruding portion 514B. The upper surface of the protruding portion 514B is a second conduction electrode surface 516A provided to face the movable substrate 52 and is in the same plane as the reflection film installation surface 512A.

In this embodiment, a cutout portion 52A is provided in a region on the side of the movable substrate 52 that is opposite to the electrode pad portion 565P. A first conduction electrode 562B is provided from the outer peripheral edge side of the movable electrode 562 on the movable substrate 52 toward the cutout portion 52A. Of the surface of the movable substrate 52 that faces the fixed substrate 51, a surface facing the second conduction electrode surface 516A is a first conduction electrode surface 566. A portion of the first conduction electrode 562B on the side of the cutout portion 52A is arranged on the first conduction electrode surface 566.

The first conduction electrode 562B comes into surface contact with and becomes electrically connected to the second conduction electrode 565 provided on the second conduction electrode surface 516A in the state where the first bonding surface 515 of the fixed substrate 51 and the second bonding surface 524 of the movable substrate 52 are bonded together via the first bonding film 531 and the second bonding film 532.

In this embodiment, the second conduction electrode surface 516A is located more closely to the first reference surface F1 than the first bonding surface 515. Therefore, a minimum distance D4 from the second conduction electrode surface 516A to the first conduction electrode surface 566 is longer than the minimum distance D2 from the first bonding surface 515 to the second bonding surface 524, as shown in FIG. 7.

### Advantageous Effects of Third Embodiment

According to the variable-wavelength interference filter 5B, similar advantageous effects to those of the first embodiment are achieved.

### Fourth Embodiment

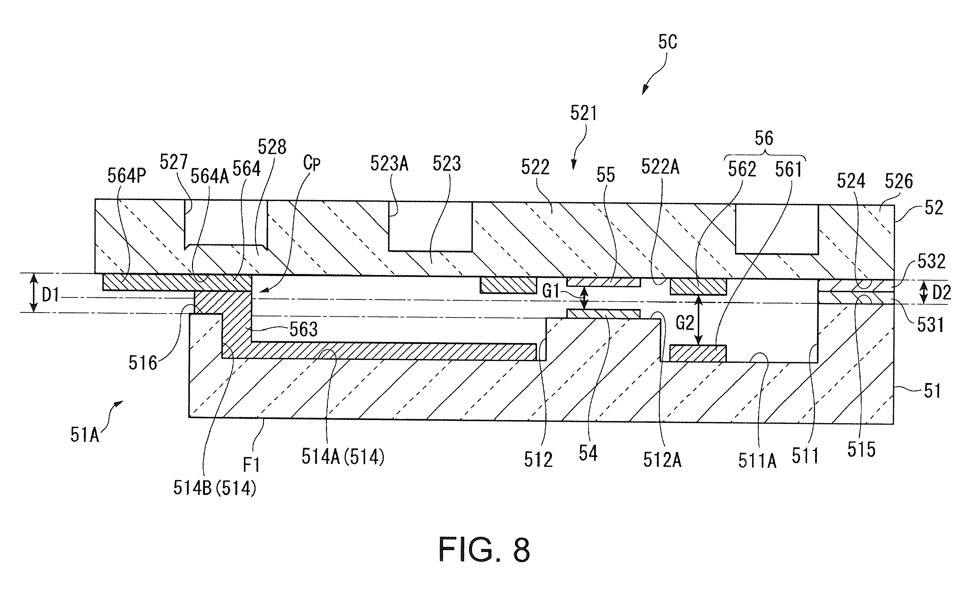

Hereinafter, a fourth embodiment of the invention will be described with reference to FIG. 8. FIG. 8 is a schematic cross-sectional view showing a variable-wavelength interference filter 5C according to this embodiment. In the following description, the same components as in the foregoing embodiments are denoted by the same reference numerals and description thereof is simplified or omitted.

On the movable substrate 52 of the variable-wavelength interference filter 5C, a groove portion 527 is provided at a position corresponding to the second conduction electrode surface 564A. The variable-wavelength interference filter 5C is different from the variable-wavelength interference filter 5 of the first embodiment in terms of the presence of the groove portion 527.

In the variable-wavelength interference filter 5C, a flexible thin portion 528 is provided between the second conduction electrode surface 564A and a bottom part of the groove portion 527. The thin portion 528 is elastic. When the first conduction electrode 563 and the second conduction electrode 564 are stacked in the process of bonding the fixed substrate 51 and the movable substrate 52 together, the thin portion 528 is deformed in a direction away from the fixed substrate 51. An elastic force of the thin portion 528 presses the first conduction electrode 563 and the second conduction electrode 564 into contact with each other.

### Advantageous Effects of Fourth Embodiment

According to this embodiment, the following effects are achieved as well as similar effects to those of the first embodiment.

According to this embodiment, when the fixed substrate 51 and the movable substrate 52 are bonded together via the first bonding film 531 and the second bonding film 532, the thin portion 528 is deformed in the direction away from the first conduction electrode surface 516. Therefore, the elastic force of the thin portion 528 urges the second conduction electrode surface 564A toward the first conduction electrode surface 516. As a result, the first conduction electrode 563 provided on the first conduction electrode surface 516 and the second conduction electrode 564 provided on the second conduction electrode surface 564A are pressed in contact with each other and can achieve more secure electrical connection. Moreover, as the thin portion 528 is deformed in the direction away from the first conduction electrode surface 516, the force transmitted to the movable portion 522 and the connection holding portion 523 can be reduced and a flexure or curvature of the movable substrate 52 can be restrained.

### Fifth Embodiment

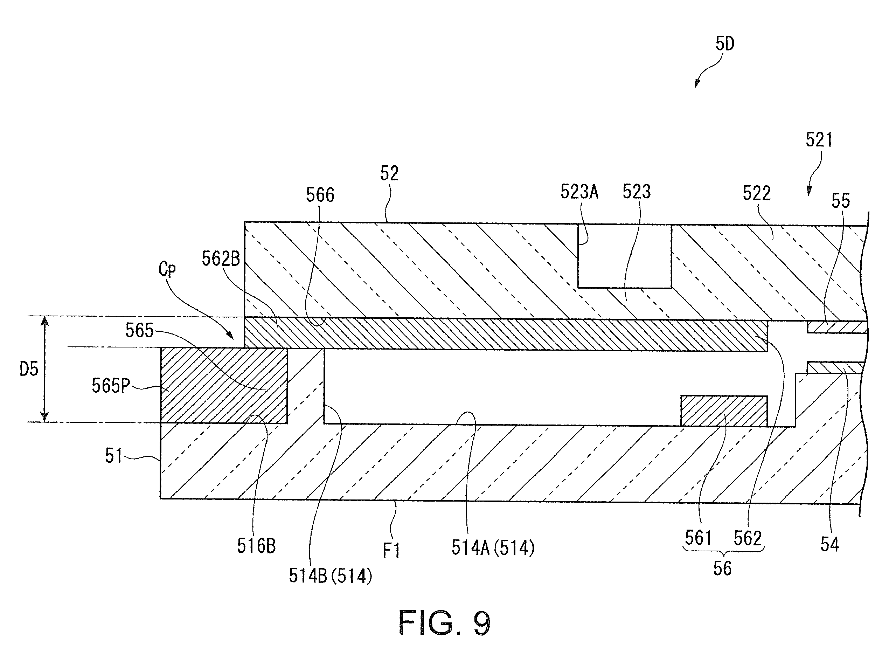

Hereinafter, a fifth embodiment of the invention will be described with reference to FIG. 9. FIG. 9 is a schematic cross-sectional view showing a part of the cross section of a variable-wavelength interference filter 5D according to this embodiment. In the following description, the same components as in the foregoing embodiments are denoted by the same reference numerals and description thereof is simplified or omitted.

As shown in FIG. 9, the variable-wavelength interference filter 5D is different from the variable-wavelength interference filter 5B of the third embodiment in that the second conduction electrode 565 is not provided up to the upper surface of the protruding portion 514B and contacts the first conduction electrode 562B at a portion on the outer side of the protruding portion 514B.

In this embodiment, the surface of the fixed substrate 51 where second conduction electrode 565 and the electrode pad portion 565P are provided is a second conduction electrode surface 516B. As shown in FIG. 9, the second conduction electrode surface 516B is located more closely to the first reference surface F1 than the first bonding surface 515. Therefore, a minimum distance D5 from the second conduction electrode surface 516B to the first conduction electrode surface 566 is longer than the minimum distance D2 from the first bonding surface 515 to the second bonding surface 524. Also, since the minimum distance D5 is longer than the minimum distance D4 in the third embodiment, the film thickness of the second conduction electrode 565 can be increased without being limited to the film thickness of the fixed electrode 561.

### Advantageous Effects of Fifth Embodiment

According to this embodiment, similar advantageous effects to those of the third embodiment are achieved.

### Sixth Embodiment

Hereinafter, a sixth embodiment of the invention will be described with reference to the drawings.

The spectroscopic measurement device 1 of the first embodiment is configured in such a way that the variable-wavelength interference filter 5 is provided directly in the optical module 10. However, some optical modules have complex configurations. Particularly in the case of small-size optical modules, it may be difficult to provide the variable-wavelength interference filter 5 directly therein. In this embodiment, an optical filter device which enables easy installation of the variable-wavelength interference filter 5 in such an optical module will be described hereinafter.

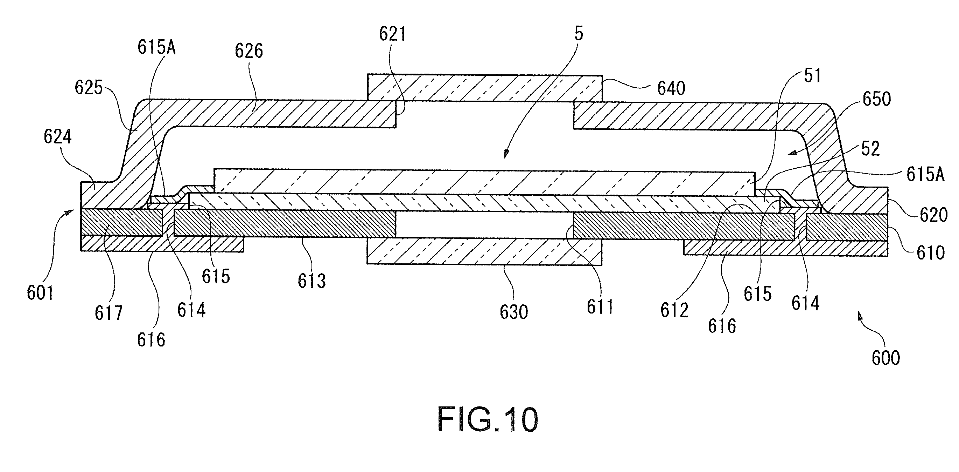

FIG. 10 is a sectional view showing the schematic configuration of an optical filter device according to this embodiment. FIG. 10 shows a state where the variable-wavelength interference filter 5 according to the first embodiment is housed in a casing 601. In the following description, the same components as in the foregoing embodiments are denoted by the same reference numerals and description thereof is simplified or omitted.

As shown in FIG. 10, an optical filter device 600 has the variable-wavelength interference filter 5, and a casing 601 housing the variable-wavelength interference filter 5.

The casing 601 includes a base substrate 610, a lid 620, a base-side glass substrate 630, and a lid-side glass substrate 640.

The base substrate 610 is made of, for example, a single-layer ceramic substrate. The movable substrate 52 of the variable-wavelength interference filter 5 is installed on the base substrate 610. To install the movable substrate 52 on the base substrate 610, for example, the movable substrate 52 may be arranged via an adhesive layer or the like, or may be arranged by being fitted with another fixing member or the like. Also, a light transmission hole 611 is opened in the base substrate 610. To base-side glass substrate 630 is bonded to cover the light transmission hole 611. As a method for bonding the base-side glass substrate 630, for example, glass frit bonding using glass frit that is glass pieces formed by melting a glass material at a high temperature and then quickly cooling the melted glass material, or bonding with an epoxy resin or the like can be used.

On a base inner surface 612 of the base substrate 610 that faces the lid 620, inner terminal portions 615 are provided corresponding respectively to the third conduction electrode 562A and the second conduction electrode 564 of the variable-wavelength interference filter 5. To connect the third conduction electrode 562A and the second conduction electrode 564 to the inner terminal portion 615, for example, an FPC 615A can be used and the components are bonded, for example, with an Ag paste, ACF (anisotropic conductive film), ACP (anisotropic conductive paste) or the like. If an internal space 650 is to be maintained in a vacuum state, it is preferable to use an Ag paste which has little degassing. The connection by the FPC 615A is not limiting and, for example, wire connection may be carried out by wire bonding.

Also, in the base substrate 610, a through-hole 614 is formed corresponding to the position where each inner terminal portion 615 is provided. Each inner terminal portion 615 is connected via an electrically conductive member filling the through-hole 614 to an outer terminal portion 616 provided on a base outer surface 613 opposite to the base inner surface 612 of the base substrate 610.

On an outer peripheral portion of the base substrate 610, a base bonding portion 617 bonded to the lid 620 is provided.

The lid 620 has a lid bonding portion 624 bonded to the base bonding portion 617 of the base substrate 610, a sidewall portion 625 continuing from the lid bonding portion 624 and standing up in a direction away from the base substrate 610, and a top portion 626 continuing from the sidewall portion 625 and covering the side of the fixed substrate 51 of the variable-wavelength interference filter 5, as shown in FIG. 10. The lid 620 can be made of an alloy such as Kovar or a metal.

The lid 620 is tightly bonded to the base substrate 610 as the lid bonding portion 624 and the base bonding portion 617 of the base substrate 610 are bonded together.

As this bonding method, for example, laser welding, soldering with a silver brazing filler, sealing with an eutectic alloy, welding with low-melting glass, glass adhering, glass frit bonding, adhering with an epoxy resin or the like can be employed. A suitable method can be selected from these bonding methods, according to the materials of the base substrate 610 and the lid 620 and the bonding environment or the like.

The top portion 626 of the lid 620 is parallel to the base substrate 610. A light transmission hole 621 is opened in the top portion 626. The lid-side glass substrate 640 is bonded to cover the light transmission hole 621. As a method for bonding the lid-side glass substrate 640, similarly to the bonding of the base-side glass substrate 630, for example, glass frit bonding, adhering with an epoxy resin or the like can be used.

### Advantageous Effects of Sixth Embodiment

In the optical filter device 600 of this embodiment as described above, since the variable-wavelength interference filter 5 is protected by the casing 601, damage to the variable-wavelength interference filter 5 due to external factors can be prevented. Also, since the inside of the optical filter device 600 is tightly closed, entry of foreign matters such as water drops and charged substances can be restrained and an inconvenience of such foreign matters adhering to the fixed reflection film 54 and the movable reflection film 55 can also be restrained.

### Other Embodiments

The invention is not limited to the foregoing embodiments. It should be understood that modifications, improvements and the like within a range that enables achievement of the object of the invention are included in the invention.

In the foregoing embodiments, the configuration in which the electrode pads are exposed outside via cutout portions formed in the substrates is used as an example. However, the invention is not limited to such a configuration. Substrates having no cutout portions and having different sizes from each other may be bonded together. For example, in the case of a configuration where electrode pads are provided on the movable substrate side as in the first embodiment, a movable substrate having no cutout portions and greater than a fixed substrate is used. By causing this movable substrate to protrude outward over an outer peripheral edge of the fixed substrate and then providing an electrode pad at this protruding portion, the electrode pad may be exposed outside.

In the foregoing embodiments, the configuration in which the first conduction electrode surface 516 and the reflection film installation surface 512A are in the same plane and the configuration in which the second conduction electrode surface 516A and the reflection film installation surface 512A are in the same plane are described as examples. However, these configurations are not limiting. A variable-wavelength interference filter in which these surfaces are provided on different planes from each other instead of in the same plane may also be employed.

In the variable-wavelength interference filter 5C of the fourth embodiment, the configuration in which the thin portion 528 is provided on the side of the movable substrate 52 is described as an example. However, this configuration is not limiting. A flexible portion may be provided at a site of the fixed substrate 51 on the side of the first conduction electrode surface 516, or may be provided on both substrates. The provision of such a thin portion is not limited to the fourth embodiment and can also apply to the variable-wavelength interference filters described in the other embodiments and other variable-wavelength interference filters according to the invention.

In the foregoing embodiments, the configuration in which the dimension of the inter-reflection film gap G1 is varied by the electrostatic actuator 56 formed by the fixed electrode 561 and the movable electrode 562 is described as an example. However, this configuration is not limiting.

For example, a configuration using a dielectric actuator formed by a first dielectric coil provided on the fixed substrate 51 and a second dielectric coil or permanent magnet provided on the movable substrate 52 may be employed.

Moreover, a configuration using a piezoelectric actuator instead of the electrostatic actuator 56 may be employed. In this case, for example, by stacking a lower electrode layer, a piezoelectric film and an upper electrode layer on the connection holding portion 523 and varying a voltage applied between the lower electrode layer and the upper electrode layer as an input value, the piezoelectric film can be expanded or contracted to flex the connection holding portion 523.

Furthermore, the configurations in which the size of the inter-reflection film gap G1 is changed by a voltage application are not limiting. For example, a configuration in which the size of the inter-reflection film gap G1 is adjusted by changing the air pressure between the fixed substrate 51 and the movable substrate 52 with respect to the air pressure outside the variable-wavelength interference filter 5, or the like can be given as an example.

In each of the foregoing embodiments, the spectroscopic measurement device 1 is described as an example of an electronic apparatus according to the invention. However, a variable-wavelength interference filter, an optical filter device, an optical module and an electronic apparatus according to the invention can be applied to various other fields.

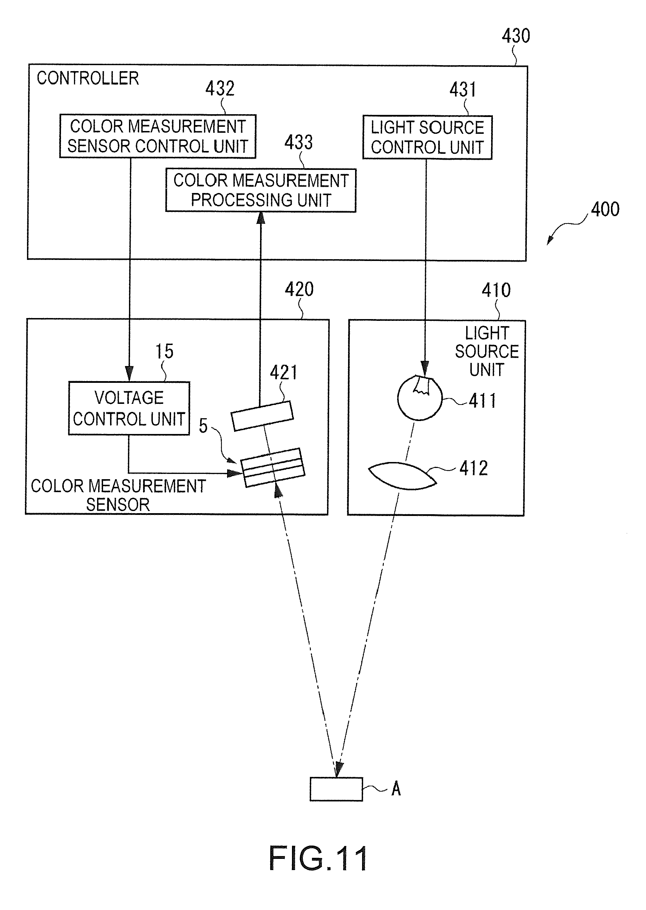

For example, as shown in FIG. 11, an electronic apparatus according to the invention can be applied to a color measurement device for measuring colors.

FIG. 11 is a block diagram showing an example of a color measurement device 400 having the variable-wavelength interference filter 5.

The color measurement device 400 has a light source unit 410 that emits light to an inspection target A, a color measurement sensor 420 (optical module), and a controller 430 (control unit) that controls the overall operation of the color measurement device 400, as shown in FIG. 11. The color measurement device 400 is a device in which light emitted from the light source unit 410 is reflected by the inspection target A, then the reflected inspection target light is received by the color measurement sensor 420, and based on a detection signal outputted from the color measurement sensor 420, the chromaticity of the inspection target light, that is, the color of the inspection target A, is analyzed and measured.

The light source unit 410 has a light source 411 and plural lenses 412 (in FIG. 11, only one lens is shown), and emits, for example, reference light (for example, white light) to the inspection target A. The plural lenses 412 may include a collimating lens, and in such a case, the light source unit 410 causes the collimating lens to collimate the reference light emitted from the light source 411 and emits the collimated light toward the inspection target A from a projection lens, not shown. While the color measurement device 400 having the light source unit 410 is described as an example in this embodiment, a configuration without having the light source unit 410 may be used, for example, if the inspection target A is a light emitting member such as a liquid crystal panel.

The color measurement sensor 420 has the variable-wavelength interference filter 5, a detector 421 that receives light transmitted through the variable-wavelength interference filter 5, and a voltage control unit 15 that controls an applied voltage to the electrostatic actuator 56 of the variable-wavelength interference filter 5, as shown in FIG. 11. The color measurement sensor 420 also has an incident optical lens, not shown, that guides inside the reflected light (inspection target light) reflected by the inspection target A, at a position facing the variable-wavelength interference filter 5. The color measurement sensor 420 spectroscopically splits light of a predetermined wavelength, of the inspection target light incident from the incident optical lens, using the variable-wavelength interference filter 5, and receives the spectroscopically split light at the detector 421.

The controller 430 is a control unit according to the invention and controls the overall operation of the color measurement device 400.

As the controller 430, for example, a general-purpose computer, portable information terminal, or dedicated computer for color measurement or the like can be used. The controller 430 includes a light source control unit 431, a color measurement sensor control unit 432, and a color measurement processing unit 433 or the like, as shown in FIG. 11.

The light source control unit 431 is connected to the light source unit 410. The light source control unit 431 outputs a predetermined control signal to the light source unit 410, for example, based on the user's setting input, and causes the light source unit 410 to emit white light with predetermined brightness.

The color measurement sensor control unit 432 is connected to the color measurement sensor 420. The color measurement sensor control unit 432 sets the wavelength of light to be received by the color measurement sensor 420, for example, based on the user's setting input, and outputs a command signal to detect the amount of light received with this wavelength to the color measurement sensor 420. Thus, based on the control signal, the voltage control unit 15 of the color measurement sensor 420 applies a voltage to the electrostatic actuator 56 to drive the variable-wavelength interference filter 5.

The color measurement processing unit 433 analyzes the chromaticity of the inspection target A based on the amount of light received that is detected by the detector 421. As in the first embodiment, the chromaticity of the inspection target A may be analyzed by estimating an optical spectrum S using an estimate matrix Ms and using the amount of light obtained by the detector 421 as a measured spectrum D.

Another example of an electronic apparatus according to the invention may be an optical-based system for detecting the presence of a specific substance. Such a system may be, for example, a gas detection device such as an on-vehicle gas leakage detector that detects a specific gas with high sensitivity by employing a spectroscopic measurement method using a variable-wavelength interference filter according to the invention, or a photoacoustic rare gas detector for breath test.

An example of such a gas detection device will be described hereinafter with reference to the drawings.

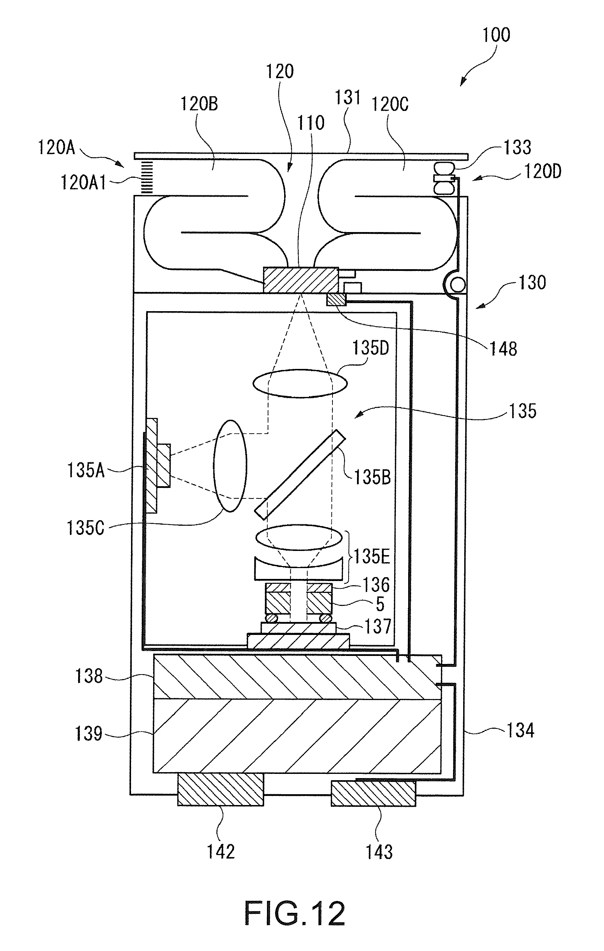

FIG. 12 is a schematic view showing an example of a gas detection device having the variable-wavelength interference filter 5.

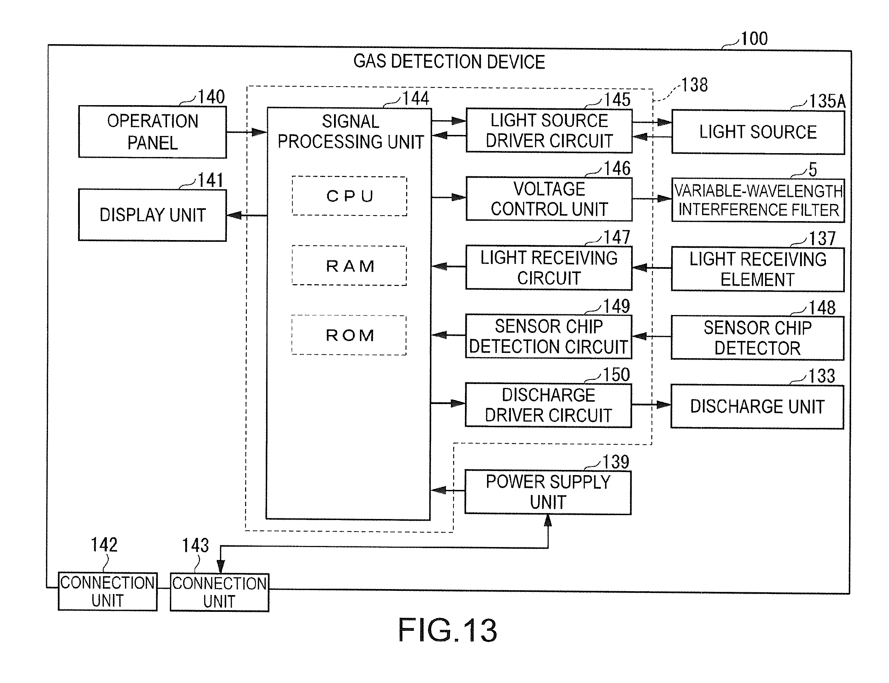

FIG. 13 is a block diagram showing the configuration of a control system of the gas detection device of FIG. 12.

This gas detection device 100 has a sensor chip 110, a flow path 120 including a suction port 120A, a suction flow path 120B, a discharge flow path 120C and a discharge port 120D, and a main body unit 130, as shown in FIG. 12.

The main body unit 130 is formed by a detection device including a sensor unit cover 131 having an opening that the flow path 120 can be attached to and removed from, a discharge unit 133, a casing 134, an optical unit 135, a filter 136, the variable-wavelength interference filter 5 and a light receiving element 137 (detection unit) or the like; a control unit 138 that processes a detected signal and controls the detection unit; and a power supply unit 139 that supplies electric power, and the like. The optical unit 135 includes a light source 135A that emits light, a beam splitter 135B that reflects light incident from the light source 135A toward the sensor chip 110 and transmits light incident from the side of the sensor chip 110 toward the light receiving element 137, and lenses 135C, 135D, 135E.

As shown in FIG. 13, an operation panel 140, a display unit 141, a connection unit 142 for interfacing with the outside, and the power supply unit 139 are provided on the surface of the gas detection device 100. If the power supply unit 139 is a secondary battery, a connection unit 143 for charging may be provided.

Moreover, the control unit 138 of the gas detection device 100 has a signal processing unit 144 made up of a CPU or the like, a light source driver circuit 145 for controlling the light source 135A, a voltage control unit 146 for controlling the variable-wavelength interference filter 5, a light receiving circuit 147 that receives a signal from the light receiving element 137, a sensor chip detection circuit 149 receiving a signal from a sensor chip detector 148 that reads a code of the sensor chip 110 and detects the presence or absence of the sensor chip 110, and a discharge driver circuit 150 that controls the discharge unit 133, as shown in FIG. 13. The gas detection device 100 also has a storage unit (not shown) for storing V-λ data.

Next, the operation of the gas detection device 100 as described above will be described hereinafter.

The sensor chip detector 148 is provided inside the sensor unit cover 131 at the top of the main body unit 130. The sensor chip detector 148 detects the presence or absence of the sensor chip 110. As the signal processing unit 144 detects a detection signal from the sensor chip detector 148, the signal processing unit 144 determines that the sensor chip 110 is installed, and sends a display signal to display that a detection operation is available for execution, to the display unit 141.

Then, for example, when the user operates the operation panel 140 and an instruction signal to start detection processing is thus outputted from the operation panel 140 to the signal processing unit 144, first, the signal processing unit 144 outputs a light source actuation signal to the light source driver circuit 145 and thus actuates the light source 135A. As the light source 135A is driven, a stable laser beam of linearly polarized light with a single wavelength is emitted from the light source 135A. Also, a temperature sensor and a light amount sensor are arranged inside the light source 135A and information from these sensors is outputted to the signal processing unit 144. If the signal processing unit 144 determines that the light source 135A is in stable operation, based on the temperature and the amount of light inputted from the light source 135A, the signal processing unit 144 controls the discharge driver circuit 150 to actuate the discharge unit 133. Thus, a gas sample containing a target substance (gas molecules) to be detected is guided from the suction port 120A to the suction flow path 120B, then into the sensor chip 110, and to the discharge flow path 120C and the discharge port 120D. A dust filter 120A1 is provided in the suction port 120A, and relatively large dust particles, a part of water vapor and the like are eliminated.

The sensor chip 110 is a sensor which has plural metal nanostructures incorporated therein and utilizes local surface plasmon resonance. In such a sensor chip 110, an enhanced electric field is formed between the metal nanostructures by a laser beam, and if a gas molecule enters into this enhanced electric field, Raman-scattered light and Rayleigh-scatter light including information of molecular vibration are generated.

Such Rayleigh-scattered light and Raman-scattered light pass through the optical unit 135 and become incident on the filter 136. The Rayleigh-scattered light is separated by the filter 136, and the Raman-scattered light becomes incident on the variable-wavelength interference filter 5. The signal processing unit 144 outputs a control signal to the voltage control unit 146. Thus, as described in the first embodiment, the voltage control unit 146 reads a voltage value corresponding to the measurement target wavelength from the storage unit, applies the voltage to the electrostatic actuator 56 of the variable-wavelength interference filter 5, and thus causes the variable-wavelength interference filter 5 to spectroscopically split the Raman-scattered light corresponding to the detection target gas molecule. After that, when the spectroscopically split light is received by the light receiving element 137, a light receiving signal corresponding to the amount of light received is outputted to the signal processing unit 144 via the light receiving circuit 147. In this case, the target Raman-scattered light can be taken out highly accurately via the variable-wavelength interference filter 5.

The signal processing unit 144 compares the spectrum data of the Raman-scattered light corresponding to the detection target gas molecule, thus obtained, with data stored in a ROM, then determines whether the gas molecule is the target gas molecule or not, and specifies the substance. The signal processing unit 144 also causes the display unit 141 to display information of the result thereof and outputs the information of the result to outside from the connection unit 142.

In FIGS. 12 and 13, the gas detection device 100 that causes the variable-wavelength interference filter 5 to spectroscopically split Raman-scattered light and detects a gas from the spectroscopically split Raman-scattered light, is described as an example. However, a gas detection device that detects a gas-specific degree of light absorption and thus specifies a gas type may also be used. In such a case, a gas sensor that causes a gas to flow into the sensor and detects light absorbed in the gas, of incident light, is used as an optical module according to the invention. A gas detection device that analyzes and determines the gas flowing into the sensor, using such a gas sensor, is employed as an electronic apparatus according to the invention. With this configuration, too, components of the gas can be detected using the variable-wavelength interference filter according to the invention.

Also, as a system for detecting the presence of a specific substance, substance component analysis devices such as a non-invasive saccharide measurement device using near infrared spectroscopy and a non-invasive measurement device for information about food, living body, minerals and the like can be given as examples, other than the above gas detection device.

Hereinafter, a food analysis device will be described as an example of the above substance component analysis device.

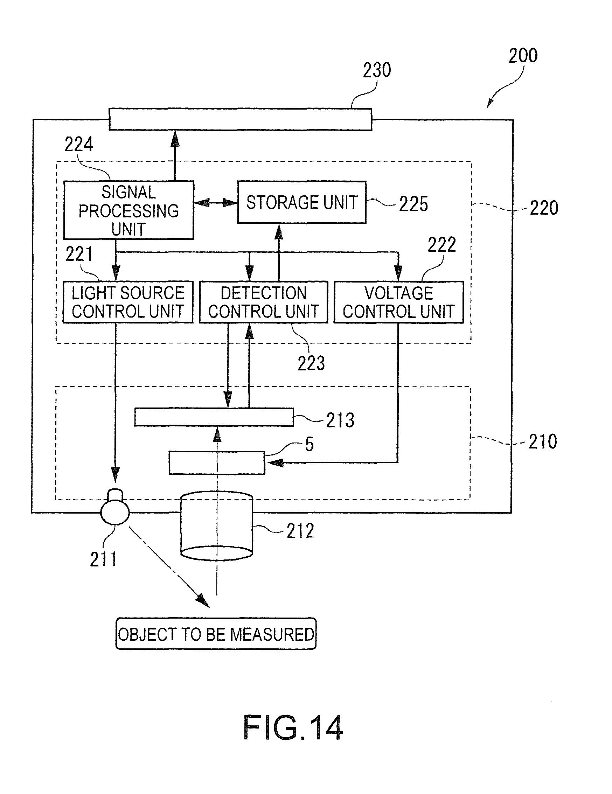

FIG. 14 shows the schematic configuration of a food analysis device as an example of an electronic apparatus using the variable-wavelength interference filter 5.

This food analysis device 200 has a detector 210 (optical module), a control unit 220, and a display unit 230, as shown in FIG. 14. The detector 210 has a light source 211 that emits light, an image pickup lens 212 to which light from an obj ect to be measured is introduced, the variable-wavelength interference filter 5 that spectroscopically splits the light introduced from the image pickup lens 212, and a image pickup unit 213 (detection unit) that detects the spectroscopically split light.

The control unit 220 has a light source control unit 221 that controls switching on and off of the light source 211 and controls brightness when the light source 211 is on, a voltage control unit 222 that controls the variable-wavelength interference filter 5, a detection control unit 223 that controls the image pickup unit 213 and acquires a spectroscopic image picked up by the image pickup unit 213, a signal processing unit 224, and a storage unit 225.

In this food analysis device 200, when the system is driven, the light source 211 is controlled by the light source control unit 221 and light is cast from the light source 211 onto the object to be measured. Then, the light reflected by the object to be measured passes through the image pickup lens 212 and becomes incident on the variable-wavelength interference filter 5. The variable-wavelength interference filter 5 is driven under the control of the voltage control unit 222. Thus, light of a target wavelength can be taken out highly accurately via the variable-wavelength interference filter 5. The light, thus taken out, is picked up by the image pickup unit 213 including, for example, a CCD camera or the like. The picked-up light is stored as a spectroscopic image in the storage unit 225. The signal processing unit 224 controls the voltage control unit 222 to change the voltage value applied to the variable-wavelength interference filter 5, and acquires a spectroscopic image corresponding to each wavelength.

The signal processing unit 224 carries out arithmetic processing of data of each pixel in each image stored in the storage unit 225 and thus finds the spectrum at each pixel. In the storage unit 225, for example, information about ingredients of food corresponding to the spectrum is stored. The signal processing unit 224 analyzes the resulting spectrum data, based on the information about food stored in the storage unit 225, and finds food ingredients contained in the detection target and the amount of the ingredients contained. The calories, freshness and the like of the food can also be calculated, based on the resulting food ingredients and the amount of the ingredients contained. Moreover, by analyzing the spectral distribution in the image, extraction of a part where freshness is lowered in the inspection target food or the like can be carried out. Also, foreign matters or the like contained in the food can be detected.

Then, the signal processing unit 224 carries out processing to cause the display unit 230 to display information about the ingredients of the inspection target food, the amount of the ingredients contained, the calories and freshness and the like, acquired as described above.

While FIG. 14 shows the food analysis device 200 as an example, a non-invasive measurement device for other types of information as described above, having a substantially similar configuration, can also be used. A similar configuration can be used, for example, as a bioanalysis device that analyzes components of a living body, for example, by measuring and analyzing components of bodily fluids such as blood. If a device that detects ethyl alcohol is used as such a bioanalysis device, for example, as a device that measures components of body fluids such as blood, the device can be used as a drunk driving prevention device that detects the drunk state of the driver. Also, an electronic endoscope system having such a bioanalysis device can be used.

Moreover, a similar configuration can be used as a mineral analysis device that analyzes components of minerals.

Furthermore, the variable-wavelength interference filter, the optical filter device, the optical module and the electronic apparatus according to the invention can be applied to the following devices.

For example, by changing the intensity of light of each wavelength with time, it is possible to transmit data on the light of each wavelength. In this case, light of a specific wavelength is spectroscopically split by the variable-wavelength interference filter according to the invention provided in an optical module and then received by a light receiving unit. Thus, data transmitted on the light of the specific wavelength can be extracted. By processing the data of light of each wavelength using an electronic apparatus having such an optical module for data extraction, it is possible to carry out optical communication.

The electronic apparatus can also be applied to a spectroscopic camera, spectroscopic analyzer or the like that spectroscopically splits light by the variable-wavelength interference filter according to the invention, and thus picks up a spectroscopic image. An example of such a spectroscopic camera may be an infrared camera having the variable-wavelength interference filter 5 as a built-in component.

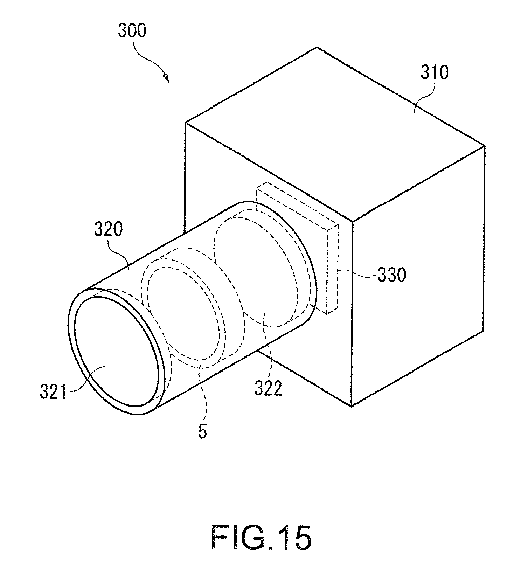

FIG. 15 is a schematic view showing the schematic configuration of a spectroscopic camera. A spectroscopic camera 300 has a camera main body 310, an image pickup lens unit 320, and an image pickup unit 330 (detection unit), as shown in FIG. 15.

The camera main body 310 is a part that the user holds and operates.

The image pickup lens unit 320 is provided on the camera main body 310 and guides incident image light to the image pickup unit 330. The image pickup lens unit 320 has an objective lens 321, an imaging lens 322, and the variable-wavelength interference filter 5 provided between these lenses, as shown in FIG. 15.

The image pickup unit 330 includes a light receiving element and picks up the image light guided by the image pickup lens unit 320.

In such a spectroscopic camera 300, light of an image pickup target wavelength is transmitted through the variable-wavelength interference filter 5, thus enabling a spectroscopic image of light of a desired wavelength to be picked up.

Moreover, the variable-wavelength interference filter according to the invention may be used as a band-pass filter. For example, the variable-wavelength interference filter can be used for an optical laser device that spectroscopically splits and transmits, via the variable-wavelength interference filter, only light in a narrow range around a predetermined wavelength, of light in a predetermined wavelength range emitted from a light emitting element.

Also, the variable-wavelength interference filter according to the invention may be used for a biometrics authentication device. For example, the variable-wavelength interference filter can be applied to an authentication device for blood vessel, fingerprint, retina, iris or the like, using light in a near infrared range or visible range.

Moreover, the optical module and the electronic apparatus can be used as a concentration detection device. In this case, infrared energy (infrared ray) emitted from a substance is spectroscopically split and analyzed by the variable-wavelength interference filter according to the invention, thus measuring the concentration of a detection target in a sample.

As described above, the variable-wavelength interference filter, the optical filter device, the optical module, and the electronic apparatus according to the invention can be applied to any device that spectroscopically splits predetermined light from incident light. Since the variable-wavelength interference filter according to the invention can spectroscopically split plural wavelengths by the single device, as described above, measurement of the spectrum of plural wavelengths and detection of plural components can be carried out accurately. Therefore, compared with a traditional device that takes out a desired wavelength by plural devices, miniaturization of the optical module and the electronic apparatus can be promoted, and the device can be suitably used, for example, as a portable or on-vehicle optical device.

The specific structures to carry out the invention can be suitably changed to other structures within a range that can achieve the object of the invention.

## Claims

1. A variable-wavelength interference filter comprising:
a first substrate;
a second substrate facing the first substrate;
a first reflection film provided on the first substrate;
a second reflection film provided on the second substrate and facing the first reflection film;
a first electrode provided on the first substrate;
a first conduction electrode provided on the first substrate and provided from the first electrode up to an outer peripheral edge side of the first substrate over the first electrode;
a second electrode provided on the second substrate and facing the first electrode;
a second conduction electrode provided on the second substrate and electrically connected to the first electrode via the first conduction electrode; and
a bonding layer bonding together a first bonding surface of the first substrate and a second bonding surface of the second substrate facing the first bonding surface;
wherein the first substrate has a first conduction electrode surface facing a contact surface where the first conduction electrode and the second conduction electrode contact each other,
the second substrate has a second conduction electrode surface facing the contact surface, and
a minimum distance from the first conduction electrode surface to the second conduction electrode surface is different from a minimum distance from the first bonding surface to the second bonding surface.

2. The variable-wavelength interference filter according to claim 1,
wherein the minimum distance from the first conduction electrode surface to the second conduction electrode surface is longer than the minimum distance from the first bonding surface to the second bonding surface.

3. The variable-wavelength interference filter according to claim 1,
wherein the minimum distance from the first conduction electrode surface to the second conduction electrode surface is shorter than the minimum distance from the first bonding surface to the second bonding surface.

4. The variable-wavelength interference filter according to any of claims 1 to 3,
wherein a site where the second conduction electrode surface is provided on the second substrate is flexible in a direction of thickness of the second substrate.

5. The variable-wavelength interference filter according to any of claims 1 to 4,
wherein a site where the first conduction electrode surface is provided on the first substrate is flexible in a direction of thickness of the first substrate.

6. A variable-wavelength interference filter in which light of a wavelength corresponding to a distance between reflection films facing each other is emitted outside and in which the distance is changed based on a potential difference between a first electrode and a second electrode facing the first electrode, the variable-wavelength interference filter comprising:
a first substrate on which the first electrode and a first conduction electrode connected to the first electrode are provided;
a second substrate on which the second electrode and a second conduction electrode electrically connected to the first electrode via the first conduction electrode are provided; and
a bonding layer bonding the first substrate and the second substrate together;
wherein a thickness of a multilayer portion where the first conduction electrode and the second conduction electrode overlap and contact each other is different from a thickness of the bonding layer.

7. An optical filter device comprising:
a variable-wavelength interference filter according to any of claims 1 to 6, and
a casing housing the variable-wavelength interference filter.

8. An optical module comprising:
a variable-wavelength interference filter according to any of claims 1 to 6, and
a detection unit that detects light of a wavelength selected by interference of light incident between the first reflection film and the second reflection.

9. An electronic apparatus comprising:
a variable-wavelength interference filter according to any of claims 1 to 6, and
a control unit that controls the variable-wavelength interference filter.
